Europäisches Patentamt

European Patent Office

Office européen des brevets

(11) Publication number: **0 042 273**
**B1**

(12) EUROPEAN PATENT SPECIFICATION

(45) Date of publication of patent specification: **19.02.86**

(21) Application number: **81302638.2**

(22) Date of filing: **15.06.81**

(51) Int. Cl.⁴: **F 16 F 15/08,** B 60 K 5/12,
F 16 F 1/50

(54) Vibration insulating mounting.

(30) Priority: **16.06.80 US 159997**

(43) Date of publication of application:
**23.12.81 Bulletin 81/51**

(45) Publication of the grant of the patent:
**19.02.86 Bulletin 86/08**

(84) Designated Contracting States:
**DE FR GB**

(56) References cited:
**FR-A-2 272 308**
**FR-A-2 321 637**
**GB-A- 524 258**
**US-A-2 076 034**
**US-A-2 925 973**
**US-A-3 132 830**
**US-A-4 183 496**

(73) Proprietor: **FORD MOTOR COMPANY LIMITED**
**Eagle Way**
**Brentwood Essex CM13 3BW (GB)**
㉘ **GB**

(73) Proprietor: **FORD-WERKE**
**AKTIENGESELLSCHAFT**
**Ottoplatz 2 Postfach 21 03 69**
**D-5000 Köln 21 (DE)**
㉘ **DE**

(73) Proprietor: **FORD FRANCE SOCIETE ANONYME**
**344 Avenue Napoléon Bonaparte B.P. 307**
**F-92506 Rueil Malmaison Cedex (FR)**
㉘ **FR**

(72) Inventor: **Passarell, Wayne H.**
**1296 Duckwood Court**
**Milford Michigan 48042 (US)**
Inventor: **Ziegler, Jeffry A.**
**21645 Hall Road**
**Woodhaven Michigan 48183 (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

Description

The invention relates to vibration isolating mountings and more particularly to engine mountings.

Elastomeric engine mountings have long been incorporated in motor vehicles to isolate engine vibrations from the chassis and vehicle body to provide for a more comfortable ride for the passengers. In its most common and basic form, an engine mounting has a first horizontal plate secured to the engine and a second horizontal plate secured to the frame of the motor vehicle with a block of rubber interposed between the two plates and bonded thereto.

Further developments use separate rubber pads in an assembly to isolate vibrations. Such a construction is disclosed in US—A—2,075,034.

It is also known to use vibration isolating mountings wherein the rubber acts in shear by attaching a first vertical plate to the engine and a second vertical plate to a supporting member with the rubber interposed therebetween and bonded to the two vertical plates. Such a construction is disclosed in US—A—3,132,830.

Furthermore it is disclosed in US—A—2,925,973 to use tubular housings mounted to one of the engine or chassis with an elastomeric sleeve fitted therein having an eccentrically place aperture therethrough. A bolt extends therethrough to the aperture and is fixed to the other of the engine or chassis. The thick portion of the elastomeric sleeve is loaded and the thin portion is unloaded in compression.

In US—A—4,183,496, there is described a mounting in which an inner component to be connected to the engine is surrounded by an outer two part component to be connected to the vehicle body. The outer component is split lengthwise and is connected to the inner component by two pairs of elastomeric pads which form a cross radiating from the inner component towards the outer component. When the engine weight is supported on the inner component two of the arms of the cross are in tension while the other two are in compression, so that the pads are subjected to different loads.

The mounting described in FR—A—2,272,308 has essentially the same configuration of pads extending from an inner component of the engine mount, the pads once again being under different loads during use, but in this case the pads are prestressed prior to fitting to the engine.

In all the prior art, when the mounting is used to mount the supported component, the elastomeric pads are deflected by an equal amount by the weight of the supported member.

The present invention seeks to improve on the vibration isolation afforded by the mounting.

In accordance with one aspect of the present invention, there is provided a vibration insulating mounting comprising at least one mounting component rigidly connectable to one of a supporting member and supported member; a further mounting component rigidly connectable to the other of said supporting member and supported member and at least one pad of elastomeric material connected between the mounting components, wherein one of the mounting components is formed of spaced parts and the other mounting component is a unitary part connected to the said spaced parts by respective elastomeric pads, the relative disposition and the configuration of the mounting components being such that when the supported member rests on the supporting member by way of the mounting, the spaced parts of the one component are displaced by differing amounts relative to the other component whereby the shear strain on the pad or pads connected to one of the spaced parts is significantly different from the shear strain on the pad or pads connected to the other of the spaced parts.

The improvement offered by the mounting of the invention is predicated upon the fact that it is possible for the pads associated with one of the parts of the two part component to adopt substantially their unloaded state when the member is supported, the strain caused by the weight of the member being taken by deflection of the pads connected to the part.

In accordance with a second aspect of the invention, there is provided in combination, a supported member resting on a supporting member by way of a vibration insulating mounting, wherein the mounting comprises at least one mounting component rigidly connected to one of a supporting member and supported member; a further mounting component rigidly connected to the other of said supporting member and supported member and at least one pad of elastomeric material connected between the mounting components, wherein one of the mounting components is formed of spaced parts and the other mounting component is a unitary part connected to the said spaced parts by respective elastomeric pads, the relative disposition of the mounting components being such that the spaced parts of the one component are displaced by differing amounts relative to the other component whereby the shear strain on the pad or pads connected to one of the spaced parts is significantly different from the shear strain on the pad or pads connected to the other of the spaced parts.

Three embodiments of the invention will now be described by way of example only, with reference to the accompanying drawings, in which:

Figure 1 is a side elevational view of the one embodiment of the invention.

Figure 2 is a front elevational view of the embodiment shown in Figure 1.

Figure 3 is a rear elevational view of the embodiment shown in Figure 1.

Figure 4 is a side elevational view showing the embodiment shown in Figure 1 in its mounting position.

Figure 5 is partially broken perspective view of another embodiment of an engine mount according to the invention.

Figure 6 is the embodiment shown in Figure 5 shown in its mounted position.

Figure 7 shows a side elevational view of a third embodiment of an engine mount shown in its mounted position.

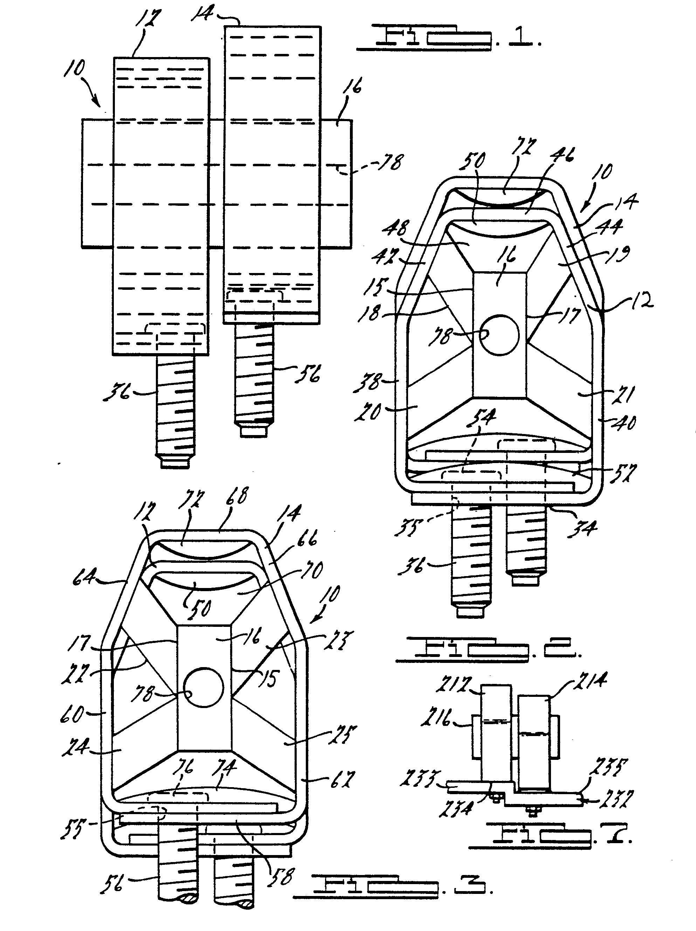

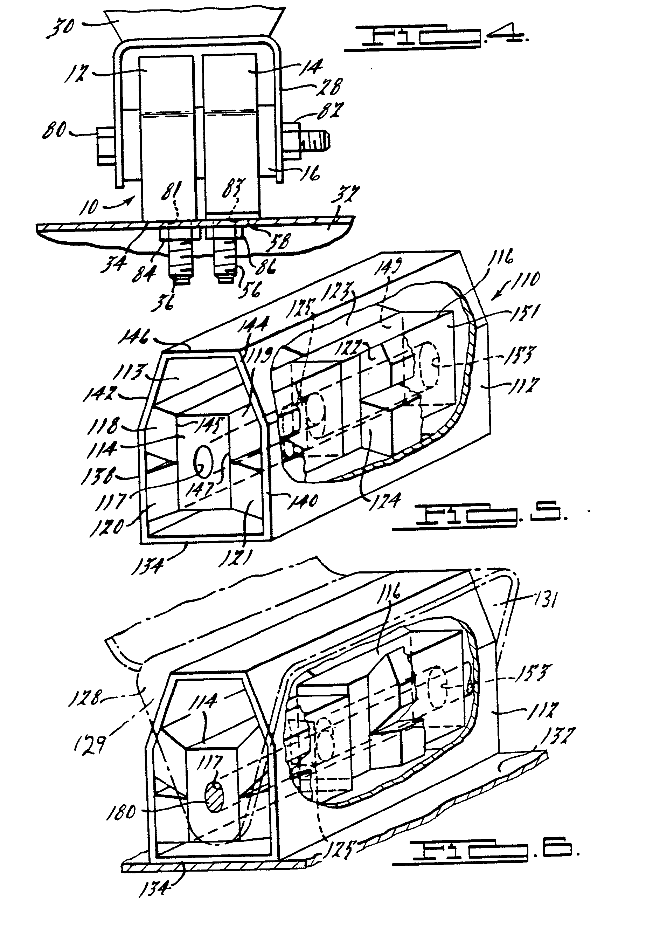

Referring to Figures 1 to 4, an engine mounting 10 has two housings 12 and 14 with a central bracket in the form of lug 16 extending therethrough. Elastomeric pads 18 to 25 are bonded to the housings 12 and 14 and lug 16. As shown in Figure 4, lug 16 is secured to a bracket 28 which is fixed to the engine 30. Housings 12 and 14 are secured to the chassis 32 of a motor vehicle.

In more detail, referring to Figure 2, housing 12 comprises a band of metal such as steel which is shaped in a generally irregular hexagon. The band overlaps itself to form bottom section 34 with a bolt 36 downwardly extending through the aperture 35 in the bottom section 34. The irregular hexagonal housing 12 has two opposing vertical extending walls 38 and 40 and above them, slightly angled but generally vertically extending and opposing walls 42 and 44. A top wall 46 spans the central opening 48 between the side walls 42 and 44. Lug 16 extends through the central opening 48. Pads 18 and 19 are bonded to the side walls 15 and 17 of the lug 16 and also the generally vertically extending walls 42 and 44 respectively. Elastomeric pads 20 and 21 likewise are bonded to the side walls 15 and 17 of lug 16 and the vertically extending walls 38 and 40. The bottom side of the top wall 46 has an elastomeric bumper 50 and the inside wall of the bottom 34 has an elastomeric bumper 52 which covers the head 54 of the bolt 36.

Housing 14 as shown in Figure 3 is similarly constructed from a band of metal shaped into an irregular hexagon with the bolt 56 extending through aperture 55 in the bottom wall 58. The housing 14 has two vertical extending and opposing walls 60 and 62 and two slightly angled but generally vertically extending and opposing walls 64 and 66. Top wall 68 spans the aperture 70 between the wall 64 and 66.

Elastomeric pads 22 and 23 are bonded to the side walls 15 and 17 of the lug 16 and bonded to the generally vertically extending wall 64 and 66 respectively. Lower elastomeric pads 24 and 25 are bonded to the side walls 15 and 17 of lug 16 and the vertical extending wall 60 and 62, respectively.

A top elastomeric bumper 72 is bonded to the underside of the top wall 68. An elastomeric bumper 74 is bonded to the top side of the bottom side 58 and covers the head 76 of bolts 56.

In comparison with the first housing, the substantial difference is that the housing 14 is vertically shifted upward relative to housing 12 such that the elastomeric pads 22 through 25 are bonded to the walls of the housing 14 in a relatively lower position than the pads 18 through 21 are bonded to the first housing 12.

The pads 18—25 themselves are aligned in pairs such that a pad 19 and 22 are aligned, 18 and 23 are aligned, 24 and 21 are aligned, and 25 and 20 are aligned, when the mount is in its unmounted position and no preload is exerted on the housings 12 and 14. Each pad 18—25 and bumpers 50, 52, 72, 74 are made from a suitable elastomeric material such as natural rubber with a durometer reading ranging from 35—60. A durometer reading of approximately 42 has been found to be quite suitable.

Referring now to Figures 1 and 4, the lug 16 has a central hole 78 longitudinally extending therethrough which receives a bolt 80 which secures the lug 16 rigidly to the bracket 28. Nut 82 is threaded onto the bolt 80. The bolts 36 and 56 are then positioned in apertures 81 and 83 in the chassis 32 and engine 30 is then lowered into position. The first housing 12 will have its bottom wall 34 abut the chassis first due to its relatively lower position. Further lowering of the engine 30 will cause the weight of the engine to force the lug 16 to be lowered with respect to the housing 12 and exert a preload in shear on the elastomeric pads 18 through 21. Simultaneously, the housing 14 will be lowered with the lug 16 until its bottom surface 58 abuts the chassis surface 32. The elastomeric pads are tuned such that when the bottom wall 58 abuts the chassis 32, the strength of the pads 18, 19, 20 and 21 will support the engine 30 such that no static shear loads are exerted on the pads 22, 23, 24 and 25. The bolts 36 and 56 are then secured to the chassis by nuts 84 and 86.

Referring to Figures 5 and 6, a second embodiment according to the invention is disclosed. An engine mount 110 has a tubular housing 112 with a central opening 113 defined therein which receives two lugs 114 and 116. Each lug has a set of elastomeric pads 118—121 and 122—125 respectively which are bonded to the tubular housing 112. As shown in Figure 6, the lugs are secured to a bracket 128 which is secured to the engine (not shown). The housing 112 in turn is secured to chassis 132.

In more detail, the tubular housing 112 has a generally irregular hexagon cross section formed by the bottom wall 134 and two opposing vertically extending walls 138 and 140 and two angled but generally vertically extending walls 142 and 144 and a top wall 146.

The lug 114 has one side 145 opposing walls 138 and 142 of housing 112, and another side 147 opposing walls 140 and 144. Lug 116 has one side 149 opposing the surfaces 138 and 142, and the other side 151 opposing walls 138 and 142. The lug 114 has a cylindrical aperture 117 extending longitudinally therethrough, and the lug 116 has an oval shaped aperture 153 extending therethrough. The aperture 117 is aligned with the top section of aperture 153 when the engine mount is unloaded as shown in Figure 5.

A bolt 180 fits through two flanges 129 and 131 of the bracket 128 and through the apertures 117 and 153 in the legs. The weight of the engine is loaded onto the mounting before bolt 180 is tightened. As the mounting is loaded, the lug 114 moves downward relative to the lug 116, housing 112 thereby exerting shear loads on pads 118—121. As the lug 116 moves downwardly, aperture 117 becomes aligned with the lower portion of aperture 153 as shown in Figure 6 and the bolt 180 slides laterally downward in aperture 153. The bolt is then tightened to fix the relative positions of lugs 114 and 116 shown in Figure 6. In this fashion, pads 118—121 are preloaded in shear while pads 122—125 are not.

A third embodiment is shown in Figure 7. The structure of the third mount closely resembles the first embodiment shown in Figures 1 to 4 in that it has two housings 212 and 214 with a central lug 216 extending through the central openings and rigidly secured to the engine (not shown). The substantial difference is the housings are aligned when in their unmounted state. The chassis section 232 has a raised section 233 which abuts the bottom 234 of housing 212. As the further weight of the engine is loaded onto the housings 212 and 214, the lug 216 preloads the elastomeric pads bonding lug 216 to the housing 212 while the housing 214 is further lowered until it abuts the lowered section of 235 of chassis 232. At this point, the housings 212 and 214 are fastened securely to the chassis such that the pads bonding the lug 216 to the housing 212 are preloaded while the pads bonding the lug 216 to the housing 214 are unloaded.

It has been found that under a static engine load better vibration isolation characteristics are presented by a mount constructed with certain pads preloaded in shear while other pads are unloaded in shear. The mount provides for a motor vehicle with a substantially improved ride free from engine vibration.

**Claims**

1. A vibration insulating mounting comprising at least one mounting component (12, 14) rigidly connectable to one of a supporting member and supported member; a further mounting (10) component rigidly connectable to the other of said supporting member and supported member and at least one pad (18—25) of elastomeric material connected between the mounting components, characterised in that one of the mounting components is formed of spaced parts (12, 14; 114, 116) and the other mounting component is a unitary part connected to the said spaced parts (16, 112) by respective elastomeric pads (18—21; 22—25), the relative disposition and the configuration of the mounting components (12, 14, 16; 112, 114, 116) being such that when the supported member rests on the supporting member by way of the mounting, the spaced parts (12, 14; 114, 116) of the one component are displaced by differing amounts relative to the other component (10; 112) whereby the shear strain on the pad or pads (18—21) connected to one of the spaced parts (12; 114) is significantly different from the shear strain on the pad or pads (22—25) connected to the other of the spaced parts (14; 116).

2. A mounting according to Claim 1, wherein the component formed in two parts (12, 14; 212, 214) is connected in use to the supporting component.

3. A mounting according to Claim 2, wherein the parts (12, 14; 114, 116) are offset from one another in a direction transverse to the longitudinal extent of the other mounting component (10; 112).

4. A mounting as claimed in Claim 1, wherein the mounting component formed in two parts (12, 14; 114, 116) is connected in use to the supported member.

5. A mounting as claimed in any of Claims 2 to 4, wherein the component connected to the supporting member, or each part thereof, comprises a housing (12, 14; 112) having an opening therethrough for receiving the mounting component (10; 114, 116) connectable to the supported member, the elastomeric pads (18—25) being disposed within the or each housing.

6. A mounting according to Claim 5, wherein said first and second mounting components each have vertically extending and opposing walls (15, 17) to which said elastomeric pads (21—25) are connected.

7. A mounting according to any preceding claim, wherein the component (10; 114, 116) to be connected to the supported member has an aperture (78; 117, 153) extending therethrough for receiving a bolt connected to the supported member.

8. A mounting as claimed in Claim 7 when appended to Claim 4, wherein the aperture (153) in one of the two parts (116) of the component is elongate in cross section to permit the component to move relative to the mounting bolt in a direction transverse to the length of the mounting bolt.

9. In combination, a supported member resting on a supporting member by way of a vibration insulating mounting, wherein the mounting comprises at least one mounting component (212, 214) rigidly connected to one of a supporting member and supported member; a further mounting component (216) rigidly connected to the other of said supporting member and supported member and at least one pad (18—25) of elastomeric material connected between the mounting components, characterised in that one of the mounting components (212, 214) is formed of spaced parts and the other mounting component (216) is a unitary part connected to the said spaced parts by respective elastomeric pads (18—21, 22—25), the relative disposition of the mounting components (212, 214) on the supported and supporting members being such that the spaced parts (212, 214) of the one component are displaced by differing amounts relative to the other component (216) whereby the shear strain on the pad or pads connected to one of the spaced parts (18 to 21) is significantly different from the shear strain on the pad or pads connected to the other of the spaced parts (22—25).

**Patentansprüche**

1. Vibrationsisolierende Aufhängung mit mindestens einem, starr mit einem eines Trageglieds und getragenen Glieds verbindbaren Aufhängungsteil (12, 14); einem weiteren starr mit dem anderen des besagten Trageglieds und getragenen Glieds verbindbaren Aufhängungsteil (10) und mindestens einem zwischen die Aufhängungsteile gekoppelten Polster (18—25) aus elastomerem Material, dadurch gekennzeichnet, dass der eine der Aufhängungsteile aus räumlich getrennten Teilen (12, 14; 114, 116) gebildet und der andere Aufhängungsteil ein mit den besagten räumlich getrennten Teilen (16, 112) durch jeweilige Elastomerpolster (18—21; 22—25) verbundener Einheitsteil ist, wobei die relative Anordnung und der Aufbau der Aufhängungsteile (12, 14, 16; 112, 114, 116) sich so verhalten, dass, wenn das getragene Glied über die Aufhängung auf dem Trageglied aufliegt, die räumlich getrennten Teile (12, 14; 114, 116) des einen Teils relativ zum anderen Teil (10, 112) in unterschiedlichem Ausmass verlagert werden, wodurch die Scherspannung an dem oder den mit dem einen der räumlich getrennten Teile (12; 114) verbundenen Polster bzw. Polstern (18—21) sich wesentlich von der Scherspannung an dem oder den mit dem anderen der räumlich getrennten Teile (14; 116) verbundenen Polster bzw. Polstern (22—25) unterscheidet.

2. Aufhängung nach Anspruch 1, dadurch gekennzeichnet, dass der aus zwei Teilen (12, 14; 212, 214) gebildete Teil im Gebrauch mit dem Trageteil verbunden ist.

3. Aufhängung nach Anspruch 2, dadurch gekennzeichnet, dass die Teile (12, 14; 114, 116) in einer transversalen Richtung zur Längsausdehnung des anderen Aufhängungsteils (10; 112) voneinander versetzt sind.

4. Aufhängung nach Anspruch 1, dadurch gekennzeichnet, dass der aus zwei Teilen (12, 14; 114, 116) gebildete Aufhängungsteil im Gebrauch mit dem getragenen Glied verbunden ist.

5. Aufhängung nach einem der Ansprüche 2 bis 4, dadurch gekennzeichnet, dass der mit dem Trageglied verbundene Teil oder jeder Teil desselben ein Gehäuse (12, 14; 112) mit einer dieses durchdringenden Oeffnung zum Aufnehmen des mit dem getragenen Glied verbindbaren Aufhängungsteils (10; 114, 116) umfasst, wobei die Elastomerpolster (18—25) innerhalb des oder jedes Gehäuses angeordnet sind.

6. Aufhängung nach Anspruch 5, dadurch gekennzeichnet, dass die besagten ersten und zweiten Aufhängungsteile jeweils sich senkrecht erstreckende und gegenüberliegende Wände (15, 17) besitzen, mit denen die besagten Elastomerpolster (21—25) verbunden sind.

7. Aufhängung nach einem der vorhergehenden Ansprüche, dadurch gekennzeichnet, dass der mit dem getragenen Glied zu verbindende Teil (10; 114, 116) eine diesen durchdringende Oeffnung (78; 117, 153) zum Aufnehmen eines mit dem getragenen Glied verbindenden Bolzens besitzt.

8. Aufhängung nach Anspruch 7 in Verbindung mit Anspruch 4, dadurch gekennzeichnet, dass die Oeffnung (153) in einem der beiden Teile (116) des Teils im Querschnitt länglich ist, um dem Teil zu gestatten, sich relativ zum Aufhängungsbolzen in einer transversalen Richtung zur Länge des Aufhängungsbolzens zu bewegen.

9. Kombination eines über eine vibrationsisolierende Aufhängung auf einem Trageglied aufliegenden getragenen Glieds, wobei die Aufhängung mindestens einen starr mit einem eines Tragegliods und getragenen Glieds verbundenen Aufhängungsteil (212, 214) umfasst; einen weiteren, starr mit dem anderen des besagten Tragegliods und getragenen Glieds verbundenen Aufhängungsteil (216) und mindestens ein zwischen die Aufhängungsteile gekoppeltes Polster (18—25) aus elastomerem Material, dadurch gekennzeichnet, dass der eine der Aufhängungsteile (212, 214) aus räumlich getrennten Teilen gebildet wird und der andere Aufhängungsteil (216) ein mit den besagten räumlich getrennten Teilen durch jeweilige Elastomerpolster (18—21, 22—25) verbundener Einheitsteil ist, wobei die relative Anordnung der Aufhängungsteile (212, 214) an den getragenen und Tragegliedern sich so verhält, dass die räumlich getrennten Teile (212, 214) des einen Teils relativ zum anderen Teil (216) in unterschiedlichem Ausmass verlagert werden, wodurch die Scherspannung an dem oder den mit dem einen der räumlich getrennten Teile (18 bis 21) verbundenen Polster bzw. Polstern sich wesentlich von der Scherspannung an dem oder den mit dem anderen der räumlich getrennten Teile verbundenen Polster bzw. Polstern (22—25) unterscheidet.

**Revendications**

1. Monture d'isolation contre les vibrations comprenant au moins un élément de monture (12, 14) pouvant être fixé à demeure sur l'une des pièces constituées par une pièce porteuse et une pièce portée, un autre élément de monture (10) pouvant être relié à demeure à l'autre des pièces constituées par la pièce porteuse et la pièce portée et au moins un bloc (18—25) de matière élastomère fixé entre les éléments de monture, caractérisée en ce que l'un des éléments de monture est formé de pièces espacées (12, 14; 114, 116) et l'autre élément de monture est une partie unitaire reliée auxdites parties espacées (16, 112) par des blocs d'élastomère respectifs (18—21; 22—25), la disposition relative et la configuration des éléments de monture (12, 14, 16; 112, 114, 116) étant telles que, lorsque la pièce portée repose sur la pièce porteuse par l'intermédiaire de la monture, les parties espacées (12, 14; 114, 116) du premier élément sont déplacées de valeurs différentes par rapport à l'autre élément (10; 112), de sorte que la contrainte en cisaillement sur le ou les blocs (18—21) reliées à l'une des pièces

5

espacées (12; 114) est notablement différente de la contrainte en cisaillement sur le ou les blocs (22—25) reliés à l'autre des pièces espacées (14; 116).

2. Monture selon la revendication 1, dans laquelle l'élément formé de deux parties (12, 14; 212, 214) est relié en cours d'utilisation à l'élément porteur.

3. Monture selon la revendication 2, dans laquelle les parties (12, 14; 114, 116) sont décalées l'une par rapport à l'autre suivant une direction transversale à l'étendue longitudinale de l'autre élément de monture (10; 112).

4. Monture telle que revendiquée dans la revendication 1, dans laquelle l'élément de monture formé de deux parties (12, 14; 114, 116) est relié en cours d'utilisation à la pièce portée.

5. Monture telle que revendiquée dans l'une quelconque des revendications 2 à 4, dans laquelle l'élément relié à la pièce porteuse, ou chaque partie de celui-ci, comprend un logement (12, 14; 112) présentant une ouverture à travers lui pour recevoir l'élément de monture (10; 114, 116) qui peut être relié à la pièce portée, les blocs d'élastomère (18—25) étant disposés à l'intérieur du ou de chaque logement.

6. Monture selon la revendication 5, dans laquelle lesdits premier et second éléments de monture présentent chacun des parois s'étendant verticalement et se faisant face (15, 17) auxquelles sont reliés lesdits blocs d'élastomère (21—25).

7. Monture selon n'importe quelle revendication précédente, dans laquelle l'élément (10; 114, 116) à relier à la pièce portée présente une ouverture (78; 117, 153) s'étendant à travers lui pour recevoir un boulon relié à la pièce portée.

8. Monture telle que revendiquée dans la revendication 7 lorsqu'elle dépend de la revendication 4, dans laquelle l'ouverture (153) ménagée dans l'une des deux parties (116) de l'élément est allongée en section transversale de manière à permettre à l'élément de se déplacer par rapport au boulon de montage suivant une direction transversale à la longueur du boulon de montage.

9. En combinaison, une pièce portée reposant sur une pièce porteuse par l'intermédiaire d'une monture d'isolation contre les vibrations, la monture comprenant au moins un élément de monture (212, 214) relié à demeure à l'une des pièces constituées par une pièce porteuse et une pièce portée, un autre élément de monture (216) relié à demeure à l'autre des pièces constituées par ladite pièce porteuse et ladite pièce portée et au moins un bloc (18—25) en matière élastomère fixé entre les éléments de monture, caractérisée en ce que l'un des éléments de monture (212, 214) est formé de parties espacées et l'autre élément de monture (216) est une partie unitaire reliée auxdites parties espacées par des blocs d'élastomère respectifs (18—21, 22—25), la disposition relative des éléments de monture (212, 214) sur les pièces portée et porteuse étant telle que les parties espacées (212, 214) du premier élément sont déplacées de valeurs différentes par rapport à l'autre élément (216), de sorte que la contrainte en cisaillement sur le ou les blocs reliés à l'une des parties espacées (18 à 21) est notablement différente de la contrainte en cisaillement sur le ou les blocs reliés à l'autre des parties espacées (22—25).

FIG. 1.

FIG. 2.

FIG. 3.

FIG. 7.

0 042 273

FIG.4.

FIG.5.

FIG.6.

2